# EUROPÄISCHE PATENTSCHRIFT

(11) **EP 0 303 766 B1**
(45) Veröffentlichungstag und Bekanntmachung des Hinweises auf die Patenterteilung: **30.06.1993**
(21) Anmeldenummer: 88106312.7
(22) Anmeldetag: 20.04.1988
(51) Int. Cl.: H04M 1/72, H04M 1/02

(54) **Einrichtung zum Reinigen einer Kontaktverbindung**
Device for cleaning a contacting connection
Dispositif pour le nettoiement d'une liaison de contact

(30) Priorität: 21.08.1987 DE 3727934
(43) Veröffentlichungstag der Anmeldung: 22.02.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Ehms, Uwe, Kurgartenstrasse 37 D-8510 Fürth/Bay (DE)

(56) Entgegenhaltungen:
- EP-A- 0 148 458
- DE-A- 3 400 294
- US-A- 4 560 223
- US-A- 4 581 498
- PATENT ABSTRACTS OF JAPAN, Band 9, Nr. 4 (E-288)[1727], 10. Januar 1985 & JP-A-59 153 340

## Beschreibung

Die Erfindung betrifft eine Einrichtung zum automatischen Reinigen einer lösbaren Kontaktverbindung elektrischer Kontakte, die beim Auflegen oder Anhängen eines Handapparates auf oder an eine Basisstation eines drahtlosen Fernsprechapparates betätigt werden, wobei der Handapparat im wesentlichen aus einem Unter- und Oberteil mit dazwischenliegender Leiterplatte, einer Hör- und Sprechkapsel, einem Tastenfeld und einem Batterieeinschub besteht.

Es sind lösbare Kontaktverbindungen bekannt, bei denen durch Aneinandergleiten von zwei Kontaktteilen eine sich selbst reinigende Kontaktanlage elektrischer Kontakte erreicht wird (Steckverbindungen). Aus EP-A2-0 148 458 ist ferner bei einem drahtlosen Telefonapparat bekannt, daß beim Auflegen des Handapparates auf die zugeordnete Basisstation eine Ladekontaktverbindung zwischen einem aufladbaren Batteriesatz im Handapparat und der Basisstation vorgenommen wird. Obwohl seitens der Basisstation zwei federnde Kontaktstifte vorhanden sind, geschieht dies durch eine ruhende Kontaktverbindung, da beim Auflegen und Abheben des Handapparates keine Relativbewegung zwischen den Kontakten stattfindet. Eine Oxydation und Verschmutzung der Kontakte bei einer lösbaren Kontaktverbindung der geschilderten Art ist nur zu vermeiden, wenn die Kontakte mit einem bestimmten Auflagedruck ständig an der gleichen Auflagestelle zur Berührung kommen. Um eine derartige Bedingung zu gewährleisten, ist eine sehr genaue Führung des Handapparates durch die Basisstation beim Auflegen erforderlich. In der Praxis hat sich jedoch gezeigt, daß durch unterschiedliches Ablegen des Handapparates auf die Basisstation durch den Benutzer nicht immer eine sichere und lagengleiche Kontaktanlage der Kontaktverbindungsteile gegeben ist.

Weiterhin ist aus der US-A-4 560 223 ein selbstreinigender Kontakt bekannt. Dieser besteht aus einem zylindrischen Teil mit einem Schaft und einer Krone. Die Krone weist drei Spitzen auf, die federnd gegen eine ihnen gegenüberliegende Kontaktfläche gedrückt werden. Die Federkraft ist so gewählt, daß auch bei stärkerer Verschmutzung der Kontaktfläche diese Verschmutzung von den Spitzen der Krone durchstoßen wird. Bei einer derartigen Kontaktierung ist natürlich auch die eigentliche Kontaktfläche einem starken Verschleiß ausgesetzt und kann leicht zerstört werden. Für eine sichere Kontaktgabe zwischen einer Basisstation und einem Handapparat ist diese Art der Kontaktierung sicher nicht geeignet.

Aufgabe der Erfindung ist es daher, eine Einrichtung zur elektrischen Kontaktierung eines Handapparates beim Auflegen auf einen drahtlosen Telefonapparat zur Ladung der im Handapparat befindlichen Batterien zu schaffen, bei der der Handapparat beim Auflegen auf die Basisstation möglichst zwangsläufig seine Endlage einnimmt und hierbei gleichzeitig eine einwandfreie sichere elektrische Kontaktverbindung zur Basisstation herstellt.

Gemäß der Erfindung ist zu diesem Zweck eine Führung zwischen Handapparat und Basisstation vorgesehen, die den Handapparat beim Ablegen auf die Basisstation durch sein Eigengewicht zwangsläufig in eine Endlage bringt und die Kontaktanlagestellen der Kontaktverbindungen sind als Schiebekontakte ausgebildet. Hierdurch werden die Kontaktstellen sowohl beim Auflegen als auch beim Abnehmen des Handapparates gereinigt.

Ein Ausführungsbeispiel wird nachfolgend anhand einer Zeichnung näher erläutert.

Es zeigen
- - Fig. 1: eine teilweise aufgebrochen gezeichnete Seitenansicht eines drahtlosen Fernsprechapparates mit einer Kontaktverbindung zwischen Handapparat und Basisstation,
- - Fig. 2: eine vergrößert gezeichnet Teilansicht der Fig. 1.

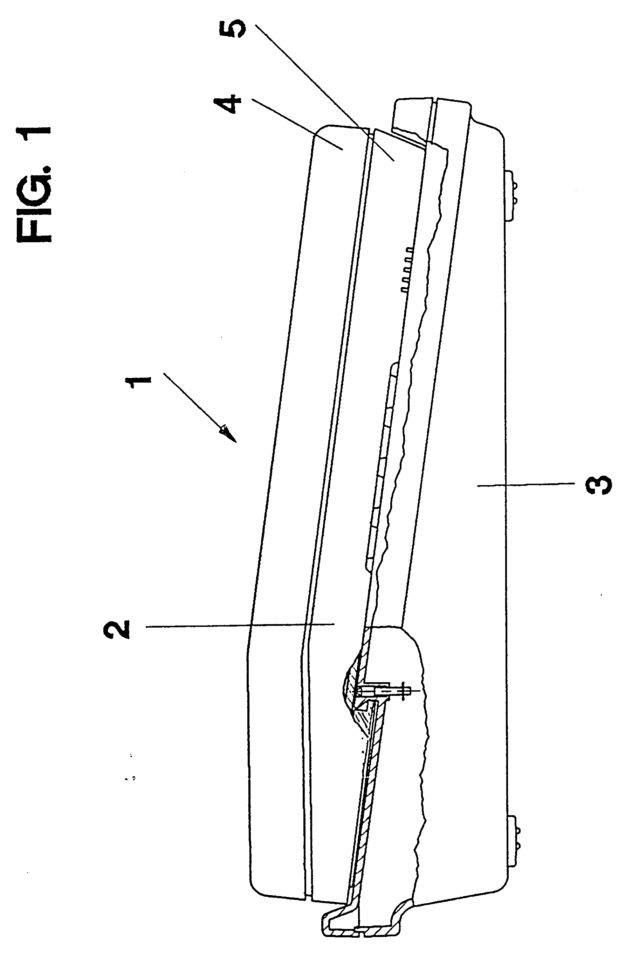

Die Fig. 1 zeigt einen drahtlosen Fernsprechapparat 1, der aus einem Handapparat 2 und einer Basisstation 3 gebildet ist. Der Handapparat besteht hierbei im wesentlichen aus einem Oberteil 4 und einem Unterteil 5 mit dazwischenliegender Leiterplatte, die die Bauteile trägt, und einer nicht näher dargestellten Hör- und Sprechkapsel, einem Tastenfeld sowie einem Batterieeinschub. Über eine lösbare Kontaktverbindung ist der Handapparat mit der Basisstation zum Aufladen des im Handapparat befindlichen Batteriesatzes verbunden.

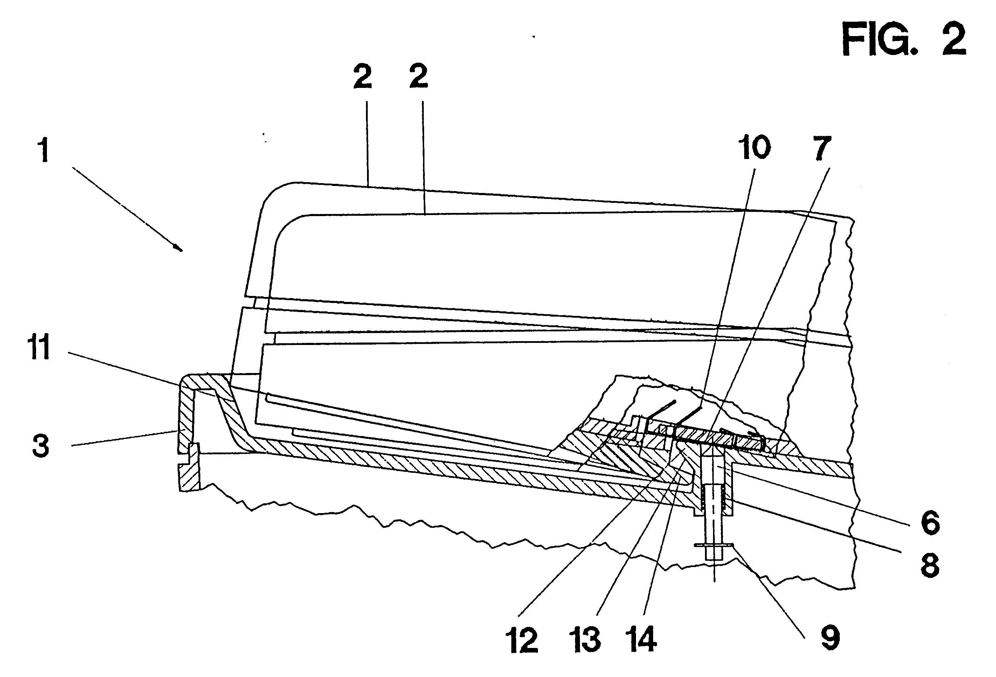

Die Fig. 2 zeigt in vergrößerter Darstellung eine Teilansicht der Fig. 1 und hierbei den Bereich der Kontaktverbindung. Die Kontaktverbindung besteht aus zwei nebeneinander angeordneten Kontaktstiften 6, die der Bodenstation zugeordnet sind und aus zwei den Kontaktstiften gegeüberliegenden streifenförmigen Kontaktbahnen 7, die sich im Handapparat befinden. Beide Kontaktstifte sind beweglich und unter ständiger Federspannung in Führungsbohrungen gelagert. Die Stifte weisen eine Kontaktspitze auf und haben einen abgesetzten Schaft, auf dem eine Druckfeder 8 aufgeschoben ist. Der Federhub der Kontaktstifte ist durch eine Sicherungsscheibe 9 begrenzt. Die Kontaktbahnen sind nach dem dargestellten Beispiel mit einer Lötfahne 10 versehen. In der dargestellten Fig. 2 zeigt die Zeichnung den Handapparat in zwei Stellungen. Der Handapparat ist einmal in seiner Endstellung nach dem Aufgleiten auf die Basisstation 3 und zum anderen unmittelbar beim Aufsetzen auf die Basisstation dargestellt.

Beim Aufsetzen auf die Basisstation kommt der Handapparat zwangsläufig zur Anlage an eine schräge Gleitfläche 11, die sich an der Basisstation befindet. Das zwangsläufige Aufgleiten des Handapparats auf die Basisstation ist im wesentlichen dadurch gegeben, daß die Basisstation im Kontaktierungsbereich 6,7 eine Führungsnase 12 mit einer nach innen gerichteten Schrägfläche 13 aufweist und daß der Handapparat mit einem der Schrägfläche gegenüberliegenden wulstartigen Vorsprung 14 beim Auflegen oder beim Anhängen auf oder an die Basisstation zwangsläufig unter die Führungsnase 12 der Basisstation greift. Durch das Eigengewicht und eine vorgegebene Führung des Handapparates zur Basisstation ist somit gewährleistet, daß beim Einnehmen der Endlage die Kontaktstifte 6 mit zunehmender Druckerhöhung auf den streifenförmigen Kontaktbahnen 7 entlanggleiten. Hierbei wird die Kontaktverbindung zwischen Handapparat und Basisstation zwangsläufig einem ständigen Reinigungsvorgang unterzogen.

## Patentansprüche

1. Einrichtung zum automatischen Reinigen einer lösbaren Kontaktverbindung elektrischer Kontakte, die beim Auflegen oder Anhängen eines Handapparates (2) auf oder an eine Basisstation (3) eines drahtlosen Fernsprechapparates betätigt werden, wobei der Handapparat im wesentlichen aus einem Unter- und Oberteil mit dazwischenliegender Leiterplatte, einer Hör- und Sprechkapsel, einem Tastenfeld und einem Batterieeinschub besteht, und die Basisstation (3) wenigstens zwei federnde Kontaktstifte (6), aufweist,
**dadurch gekennzeichnet,** daß im Handapparat (2) den Kontaktstiften gegenüberliegend zwei streifenförmige Kontaktbahnen (7) eingesetzt sind, daß im Kontaktierungsbereich (6,7) die Basisstation eine Führungsnase (12) mit einer nach innen gerichteten Schrägfläche (13) aufweist, daß der Handapparat mit einem der Schrägfläche gegenüberliegenden wulstartigen Vorsprung (14) beim Auflegen oder beim Anhängen auf oder an die Basisstation hinter die Führungsnase greift, und daß beim Einnehmen der Endlage des Handapparats die Kontaktstifte mit zunehmender Druckerhöhung auf den streifenförmigen Kontaktbahnen entlanggleiten.

2. Einrichtung nach Anspruch 1,
**dadurch gekennzeichnet,** daß in der Endlage des Handapparates zur Basisstation die Verbindung beider Teile, die über die Führungsnase (12) und den wulstartigen Vorsprung (14) entsteht, formschlüssig ist und der Formschluß nur durch Verschieben des Handapparates in einer vorgegebenen Richtung aufzuheben ist.

3. Einrichtung nach Anspruch 1 oder 2,
**dadurch gekennzeichnet,** daß die Kontaktstifte (6) als Kontaktpaar in Führungsbohrungen der Basisstation eingesetzt sind, und daß die Kontaktstifte einen abgesetzten Schaft aufweisen, auf den eine Druckfeder (8) aufgeschoben ist.

## Claims

1. Device for automatically cleaning a detachable contact connection of electrical contacts which are operated during the replacing or hooking-on of a handset (2) on or at a base station (3) of a cordless telephone set, the handset essentially consisting of a lower and upper part with intermediate circuit board, a receiver and transmitter capsule, a keypad and a battery insert and the base station (3) having at least two elastic contact pins (6), characterised in that two strip-shaped contact tracks (7) are inserted in the handset (2) opposite to the contact pins, in that the base station has a guide nose (12) with an inwardly pointing inclined face (13) in the contacting area (6, 7), in that the handset grips behind the guide nose with a bead-like projection (14) opposite to the inclined face during the replacing or during the hooking-on on or at the base station, and in that when the handset assumes its end position, the contact pins slide along the strip-shaped contact tracks with growing increase in pressure.

2. Device according to Claim 1, characterised in that, in the end position of the handset with respect to the base station, the connection of both parts, which is produced via the guide nose (12) and the bead-like projection (14), is shape-locked and the shape-locking can only be cancelled by shifting the handset in a predetermined direction.

3. Device according to Claim 1 or 2, characterised in that the contact pins (6) are inserted as contact pair in guide holes of the base station, and in that the contact pins have a stepped shank onto which a compression spring (8) is pushed.

## Revendications

1. Dispositif de nettoyage automatique d'un système de liaison amovible à contacts électriques, qui sont actionnés lorsqu'on repose ou qu'on accroche un combiné (2) sur ou à un corps de base (3) d'un poste téléphonique sans fil, dans lequel le combiné est constitué essentiellement par une partie inférieure et une partie supérieure entre lesquelles est intercalée une plaquette à circuits imprimés, un écouteur et un microphone, un clavier et un tiroir à piles, et le corps de base (3) possède au moins deux broches élastiques de contact (6), caractérisé par le fait que deux bras de contact en forme de bandes (7) sont disposés dans le combiné (2) en vis-à-vis des broches de contact, que dans la zone de contact (6,7), le corps de base possède un nez de guidage (12) qui possède une surface oblique dirigée vers l'intérieur, que le combiné s'engage derrière le nez de guidage par un appendice saillant en forme de rebord (14) situé en vis-à-vis de la surface oblique, lorsqu'on repose ou qu'on raccroche le combiné sur ou au corps de base, et que lorsque le combiné est dans sa position finale, des broches de contact glissent le long des pistes de contact en forme de bandes, avec un accroissement de la pression.

2. Dispositif selon la revendication 1, caractérisé en ce que lorsque le combiné est dans sa position finale par rapport au corps de base, la liaison de ses deux parties, qui est établie par l'intermédiaire du nez de guidage (12) et de l'appendice saillant en forme de rebord (14), est une liaison par formes complémentaires et que cette liaison par formes complémentaires ne peut être supprimée que lorsqu'on déplace le combiné dans une direction prédéterminée.

3. Dispositif selon la revendication 1 ou 2, caractérisé en ce que les broches de contact (6) sont insérées sous la forme d'un couple de contacts dans des perçages de guidage du corps de base et que les broches de contact possèdent une tige étagée, sur laquelle est emmanché un ressort de pression (8).
